# EUROPÄISCHE PATENTSCHRIFT

(11) **EP 3 102 464 B1**
(45) Veröffentlichungstag und Bekanntmachung des Hinweises auf die Patenterteilung: **21.02.2018**
(21) Anmeldenummer: 14828143.9
(22) Anmeldetag: 17.12.2014
(51) Int. Cl.: B60R 21/017

(54) **VERFAHREN ZUM AUSLÖSEN EINER MEHRZAHL VON AKTOREN EINES SICHERHEITSSYSTEMS EINES KRAFTFAHRZEUGS**
METHOD FOR TRIGGERING A PLURALITY OF ACTUATORS OF A SAFETY SYSTEM OF A MOTOR VEHICLE
PROCÉDÉ POUR DÉCLENCHER UNE PLURALITÉ D'ACTIONNEURS APPARTENANT À UN SYSTÈME DE SÉCURITÉ D'UN VÉHICULE AUTOMOBILE

(30) Priorität: 06.02.2014 DE 102014202193
(43) Veröffentlichungstag der Anmeldung: 14.12.2016
(73) Patentinhaber: Continental Automotive GmbH, 30165 Hannover (DE)
(72) Erfinder: ERTL, Ludwig, 93077 Bad Abbach / Peising (DE)
(74) Vertreter: Büchner, Jörg
(86) Internationale Anmeldenummer: PCT/DE2014/200722
(87) Internationale Veröffentlichungsnummer: WO 2015/117581

(56) Entgegenhaltungen:
- EP-A1- 0 882 624
- EP-A1- 1 591 309
- DE-A1-102005 008 190

## Beschreibung

Die Erfindung betrifft ein Verfahren zum Auslösen einer Mehrzahl von Aktoren eines Sicherheitssystems eines Kraftfahrzeugs gemäß dem Oberbegriff von Anspruch 1.

Heutige Sicherheitssysteme für Kraftfahrzeuge weisen eine große Vielzahl von Aktoren, beispielsweise Airbags, aber auch Gurtstraffern, Überrollbügel oder Schutzeinrichtungen für Fußgänger auf. Anhand von Sensorsignalen wird im Steuergerät das Erfordernis zur Auslösung und ein gewünschter Auslösezeitraum bestimmt. Aufgrund elektrischer Impulse und Energiezufuhr werden die Aktoren ausgelöst, wobei die dafür erforderliche Energiemenge und Zeitdauer zwischen den einzelnen Aktoren unterschiedlich sein kann und über die große Vielzahl von Aktoren hinweg in Summe bei einer gleichzeitigen Auslösung aller die verfügbare Energie in der Energiequelle, beispielsweise einem zwischengeschalteten Zündkondensator übersteigt.

Aus diesem Grund wird die Auslösung üblicherweise in Gruppen mit einer maximale Gruppengröße durchgeführt. Ein entsprechendes Insassenschutzsystem ist beispielsweise aus der EP 1 591 309 A1 bekannt.

Die Aufgabe der vorliegenden Erfindung ist es, ein verbessertes Verfahren anzugeben, welches eine möglichst zeitgerechte Auslösung der einzelnen Aktoren ermöglicht, ohne dabei die verfügbare Energiequelle zu überlasten.

Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Ein wesentlicher Gedanke der Erfindung besteht darin, dass eine maximale Gruppengröße von Aktoren zur Auslösung innerhalb eines Zeitfensters nicht starr vorgegeben ist, sondern adaptiv an die Auslösesituation angepasst wird. Dazu werden für aufeinanderfolgende Zeitfenster jeweils individuelle, zumindest teils unterschiedliche maximale Gruppengrößen vorgegeben und wird die maximale Gruppengröße für das jeweilige Zeitfenster adaptiv anhand der in vorangehenden Zeitfenstern tatsächlich bereits ausgelösten Aktoren bestimmt.

Werden also in einem vorangehenden Zeitfenster weniger als die für dieses Zeitfenster maximal mögliche Gruppengröße an Aktoren ausgelöst, ergibt sich für das folgende Zeitfenster eine größere maximale Gruppengröße als wenn im vorangehenden Zeitfenster beispielsweise alle maximal möglichen Aktoren ausgelöst worden wären.

Dazu ist beispielsweise eine Abfolge von maximalen Gruppengrößen je Zeitfenster vorgegeben und wird die für das jeweilige Zeitfenster gültige maximale Gruppengröße anhand der Anzahl der in vorangehenden Zeitfenstern tatsächlich bereits ausgelösten Aktoren bestimmt.

In einer bevorzugten Ausgestaltung erfolgt dies mittels einer indexgesteuerten Tabelle, in welcher die Abfolge von maximalen Gruppengrößen gespeichert ist. Die Anzahl der in zurückliegenden Zeitfenstern bereits ausgelösten Aktoren ergibt den Index und es wird anhand der Tabelle und mittels des Index die maximale Gruppengröße ermittelt. In einer bevorzugten Weiterbildung sind für die einzelnen Aktoren zumindest teils unterschiedliche Auslösezeitdauern vorgegeben und es wird die maximale Gruppengröße für das jeweilige Zeitfenster adaptiv anhand der tatsächlich bereits ausgelösten Aktoren und deren jeweiliger Auslösezeitdauer bestimmt.

Dazu wird in einer bevorzugten Ausgestaltung die Abfolge von maximalen Gruppengrößen in Abhängigkeit von den unterschiedlichen Auslösezeitdauern der ausgelösten Aktoren verändert, indem bei einem auszulösenden Aktor mit einer ein Zeitfenster übersteigenden Auslösezeitdauer in der Abfolge entsprechend dieser übersteigenden Auslösezeitdauer in den in der Abfolge folgenden Zeitfenstern die maximale Gruppengröße jeweils reduziert wird.

Für die Aktoren sind beispielsweise unterschiedliche Prioritäten vorgegeben und es werden innerhalb eines Zeitfensters die Aktoren entsprechend deren Priorität ausgelöst und die Auslösung einer die aktuelle, adaptiv angepasste maximalen Gruppengröße überschreitenden Anzahl von Aktoren in nachfolgende Zeitfenster verschoben.

Zudem wird in einer Weiterbildung ein Nachladen der Energiequelle bei der maximalen Gruppengröße berücksichtigt, vorzugsweise nach Ablauf einer vorgegebenen Zeitspanne der Index jeweils um einen Schritt zurückgesetzt.

Die Erfindung wird nachfolgend anhand von Ausführungsbeispielen, teils unter Bezugnahme auf die Figuren näher erläutert.

Es zeigen:
- Figur 1: indexgesteuerte Tabelle der Abfolge von maximalen Gruppengrößen
- Figur 2: Schaubild eines 1. Ausführungsbeispiels
- Figur 3: Schaubild eines 2. Ausführungsbeispiels

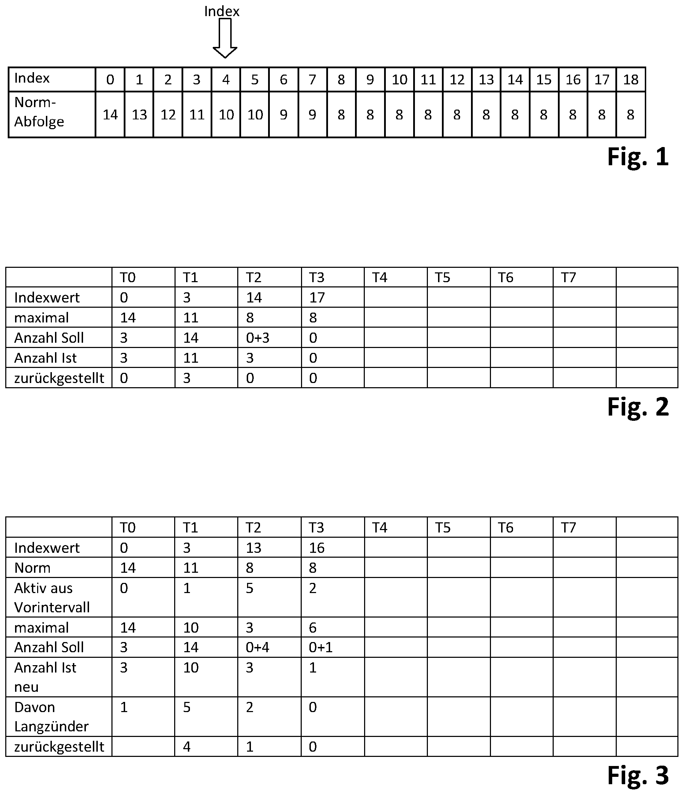

Wie Figur 1 zeigt, sind in einer indexgesteuerten Tabelle die Abfolge von maximalen Gruppengrößen gespeichert und können also bei dem Indexwert 0 insgesamt 14 Aktoren ausgelöst werden, beim Indexwert 1 nur noch 13 usw. Die konkreten Werte werden fallspezifisch vorgegeben und können durchaus für mehrere Indexwerte auch gleiche maximale Gruppengrößen vorgesehen seien, wie hier beispielsweise ab dem Indexwert 8 für alle nachfolgenden Indexwerte ebenfalls die maximale Gruppengröße immer auf 8 Aktoren liegt. Gerade in den kleineren Indexwerten sind aber eben auch individuelle, zumindest teils unterschiedliche maximale Gruppengrößen, insbesondere eben mit Erhöhung des Index abnehmende maximale Gruppengrößen hinterlegt. Die Realisierung einer solchen indexgesteuerten Tabelle ist in einem entsprechenden Speicher des Steuergerät fallspezifisch, also beispielsweise für eine bestimmte Fahrzeugreihe oder zumindest deren Ausstattung fest hinterlegt.

Die Anzahl der in zurückliegenden Zeitfenstern bereits ausgelösten Aktoren ergibt in dieser Ausgestaltung den Index und wird anhand der Tabelle mittels des Index die maximale Gruppengröße zumindest vorläufig ermittelt. Vorläufig bedeutet dabei, dass von dieser festen Tabelle unter Berücksichtigung anderer Aspekte wieder Abweichungen denkbar sind, beispielsweise aufgrund von Aktoren, welche länger als ein Zeitfenster ausgelöst werden müssen oder beispielsweise wegen der Möglichkeit der Nachladung der Energiequelle.

Für aufeinanderfolgende Zeitfenster sind jeweils individuelle, zumindest teils unterschiedliche maximale Gruppengrößen vorgegeben und wird die maximale Gruppengröße für das jeweilige Zeitfenster adaptiv anhand der in vorangehenden Zeitfenstern tatsächlich bereits ausgelösten Aktoren bestimmt, indem eine Abfolge von maximalen Gruppengrößen je Zeitfenster vorgegeben ist und die für das jeweilige Zeitfenster gültige maximale Gruppengröße anhand der Anzahl der in vorangehenden Zeitfenstern tatsächlich bereits ausgelösten Aktoren bestimmt wird.

Dies erfolgt wiederum nun in diesem Ausführungsbeispiel indem die Anzahl der in zurückliegenden Zeitfenstern bereits ausgelösten Aktoren den Index ergibt und aus der indexgesteuerten Tabelle für das konkrete Zeitfenster aufgrund des Indexstandes die maximale Gruppengröße ermittelt wird.

Die Abfolge von maximalen Gruppengrößen in der indexgesteuerten Tabelle entspricht also in diesem Ausführungsbeispiel gerade der Abfolge von maximalen Gruppengrößen für aufeinanderfolgende Zeitfenster nur für genau den Fall, dass jeweils genau ein Aktor ausgelöst würde - in allen anderen Fällen kommt es aufgrund des Indexstandes anhand der tatsächlich bereits ausgelösten Aktoren zu einer abweichenden Abfolge.

Grundsätzlich sind abweichende Realisierungen beispielsweise in Form einer Tabelle mit vorläufigen maximalen Gruppengrößen für tatsächlich zeitlich aufeinanderfolgende Zeitfenstern denkbar, wobei dann eben diese vorläufigen Werte immer anhand der bereits tatsächlich ausgelösten Aktoren angepasst werden sollten.

Figur 2 soll nun exemplarisch einen solchen Ablauf näher zeigen. Wird durch das Steuergerät durch entsprechende Sensorsignale die Auslösung eines 1. Aktors erkannt, ist in diesem Zeitpunkt T0 der Indexwert 0 und wird auf Basis dieses Indexwertes 0 in der Tabelle gemäß Figur 1 die maximale Gruppengröße, hier beispielsweise 14 abgeleitet. Sollen in diesem Zeitpunkt T0 nun 3 Aktoren ausgelöst werden, so ist diese Anzahl kleiner als die maximale Gruppengröße und können alle 3 Aktoren auch tatsächlich ausgelöst werden, muss also kein Faktor für die Auslösung in späteren Zeitfenstern zurückgestellt werden. Aufgrund der Auslösung von 3 Aktoren erhöht sich der Indexwert im folgenden Zeitfenster T1 auf 3 und ist folglich gemäß Tabelle in Figur 1 für dieses Zeitfenster T1 die maximale Gruppengröße 11. Sollen nun jedoch 14 Aktoren ausgelöst werden, so können tatsächlich eben nur maximal 11 ausgelöst werden und müssen 3 in ein späteres Zeitfenster zurückgestellt werden. Im Zeitfenster T2 ist folglich der Indexwert 14 und gemäß Tabelle aus Figur 1 die maximale Gruppengröße auf 8 gesunken. In diesem Ausführungsbeispiel liegen für das Zeitfenster T2 keine neu zu zündenden Aktoren, jedoch aber eben die 3 zurückgestellten aus dem vorangehenden Zeitfenster vor und werden durch diese nun entsprechend gezündet.

Für die Aktoren sind dabei vorzugsweise unterschiedliche Prioritäten vorgegeben und werden innerhalb eines Zeitfensters die Aktoren entsprechend deren Priorität ausgelöst, also die mit der jeweils höchsten Priorität zuerst und werden die Auslösung(en) einer die aktuelle, adaptiv angepasste maximalen Gruppengröße überschreitenden Anzahl von Aktoren in nachfolgende Zeitfenster verschoben. Grundsätzlich ist dabei auch denkbar, dass verschiedene Aktoren zwingend miteinander ausgelöst werden müssen, wie beispielsweise bei Überrollbügeln. Solche miteinander verbundenen Aktoren werden dann entsprechend auch miteinander gemeinsam gleich behandelt, notfalls zusammen in das nachfolgende Zeitfenster verschoben.

In einem weiteren Ausführungsbeispiel ist vorgesehen, dass für die einzelnen Aktoren unterschiedliche Auslösezeitdauern vorgegeben sind. Vorzugsweise wird dabei die Auslösezeitdauer in einer definierten Anzahl von denjenigen Zeitfenstern vorgegeben, in welchen auch die Auslösungen erfolgen. Die maximale Gruppengröße für das jeweilige Zeitfenster wird dabei vorzugsweise adaptiv anhand der tatsächlich bereits ausgelösten Aktoren und deren jeweiliger Auslösezeitdauer bestimmt, wie in dem Ausführungsbeispiel gemäß Figur 3 näher erläutert werden soll.

So wird die Abfolge von maximalen Gruppengrößen in Abhängigkeit von den unterschiedlichen Auslösezeitdauern der ausgelösten Aktoren verändert, indem bei einem auszulösenden Aktor mit einer ein Zeitfenster übersteigenden Auslösezeitdauern in der Abfolge entsprechend dieser übersteigenden Auslösezeitdauer in den in der Abfolge folgenden Zeitfenstern die maximale Gruppengröße jeweils reduziert wird.

Auch in diesem Ausführungsbeispiel wird vorzugsweise mit einer indexgesteuerten Tabelle gearbeitet, in welcher die Abfolge von zumindest vorläufigen maximalen Gruppengrößen gespeichert ist und die Anzahl der in zurückliegenden Zeitfenstern bereits ausgelösten Aktoren den Index ergibt und anhand der Tabelle mittels des Index die vorläufige maximale Gruppengröße ermittelt wird, zusätzlich zumindest die Anzahl der Aktoren mit das letzte Zeitfenster übersteigender Auslösezeitdauer bestimmt und diese Anzahl von der vorläufigen maximalen Gruppengröße abgezogen und die adaptive maximale Gruppengröße bestimmt wird. Der Begriff der vorläufigen maximalen Gruppengröße entspricht dabei also derjenigen Gruppengröße, welche verfügbar wäre, wenn nicht durch die Auslösung von Aktoren mit längerer Auslöserzeitdauer Abzüge für das aktuelle Zeitfenster vorzunehmen sind.

Der Ablauf in Figur 3 bezieht sich dabei wieder auf die Indextabelle gemäß Figur 1 und ergibt sich daher für den Startzeitpunkt T0 ein Indexwert 0 und eine maximale Gruppengröße von 14 sowie eine Auslösung einer Anzahl von insgesamt 3 neue zu zündenden Aktoren. Davon ist ein Aktor hier als "Langzünder" bezeichnet und wird folglich in der Zeile "aktiv aus dem Vorintervall" für entsprechend nachfolgende Zeitfenster ein Wert gesetzt bzw. erhöht. Benötigt ein "Langzünder" nur eine Verlängerung für genau ein folgendes Zeitfenster, so wird der Wert in genau nur diesen einen Feld erhöht, können jedoch auch ohne weiteres noch längere Verlängerungen berücksichtigt werden, indem für entsprechend weitere folgende Zeitfenster die Werte entsprechend angepasst werden.

Entsprechend kommt es im Zeitfenster T1 aufgrund der Auslösung von bisher 3 Aktoren zu einem Indexwert 3 und damit einer vorläufigen maximalen Gruppengröße von 11, welche aufgrund der Verlängerung des einen langen "Langzünders" noch um 1 reduziert also auf 10 gesetzt ist. Sollen nun zu diesem Zeitpunkt insgesamt 14 Aktoren ausgelöst werden, so können tatsächlich nur 10 ausgelöst werden und seien in diesem Beispiel wiederum von diesen 10 insgesamt 5 neu auszulösende "Langzünder" und müssen insgesamt 4 Aktoren für die Zündung in folgenden Zeitfenstern zurückgestellt werden.

Im Zeitfenster T2 ergibt sich somit ein Indexwert von 13 bisher tatsächlich ausgelösten Aktoren und damit eine vorläufige maximale Gruppengröße von 8, welche aufgrund von nun mehr 5 aktuell aktiven "Langzündern" aus dem Vorintervall auf einem maximale Gruppengröße von 3 reduziert werden muss.

Wäre beispielsweise der Langzünder aus dem Zeitfenster T0 für insgesamt 3 Zeitfenster zu zünden, so wäre dieser auch noch im Zeitfenster T2 zu berücksichtigen gewesen und die Anzahl der aktiven "Langzünder" aus dem Vorintervall im Zeitfenster T2 1+5=6.

Selbst wenn in dem Zeitintervall T2 keine neu auslösenden Aktoren direkt auftreten, so sind doch die 4 zurückgestellten aus dem vorherigen Zeitfenster zu berücksichtigen und können davon nunmehr nur noch 3 ausgelöst werden, muss also wiederum ein Aktoren um ein weiteres Zeitfenster zurück gestellt werden.

Auch hier sei nochmals klargestellt, dass der vorgeschlagene Ablauf mit der indexgesteuerten Tabelle und der Speicherung der zu berücksichtigenden aktiven Langzünder aus dem Vorintervall nur eine mögliche Ausgestaltung und alternative Speicherkonzepte denkbar sind.

Wiederum können dabei für die Aktoren unterschiedliche Prioritäten vorgegeben sein und werden dann innerhalb eines Zeitfensters die Aktoren entsprechend deren Priorität ausgelöst und die Auslösung einer die aktuelle, adaptiv angepasste maximale Gruppengröße überschreitende Anzahl von niederpriorisierten Aktoren in nachfolgende Zeitfenster verschoben.

Wieder kann ein Nachladen der Energiequelle bei der maximalen Gruppengröße berücksichtigt, vorzugsweise nach Ablauf einer vorgegebenen Zeitspanne der Index jeweils um einen Schritt zurückgesetzt werden.

In einem Steuergerät eines Sicherheitssystems eines Kraftfahrzeugs sind also zum Auslösen einer Mehrzahl von Aktoren aus einer Energiequelle geeignete Mittel zur Durchführung eines Verfahrens vorgesehen, insbesondere ein entsprechender Algorithmus hinterlegt sowie Speichermittel zum Speichern der Werte, beispielsweise der indexgesteuerten Tabelle, als auch der Prioritäten der unterschiedlichen Aktoren, eventuell vorhandene Verknüpfungen zwischen Aktoren und die Charakterisierung bestimmter Aktoren als Langzünder mit deren entsprechender Auslöserzeitdauer hinterlegt und werden im Betrieb des Steuergerätes entsprechend abgearbeitet.

## Patentansprüche

1. Verfahren zum Auslösen einer Mehrzahl von Aktoren eines Sicherheitssystems eines Kraftfahrzeugs aus einer Energiequelle, wobei anhand von Sensorsignalen das Erfordernis zur Auslösung und ein gewünschter Auslösezeitraum bestimmt werden und eine maximale Gruppengröße von Aktoren zur Auslösung innerhalb eines Zeitfensters vorgegeben ist, **dadurch gekennzeichnet, dass**
für aufeinanderfolgende Zeitfenster jeweils individuelle, zumindest teils unterschiedliche maximale Gruppengrößen vorgegeben sind und die maximale Gruppengröße für das jeweilige Zeitfenster adaptiv anhand der in vorangehenden Zeitfenstern tatsächlich bereits ausgelösten Aktoren bestimmt wird.

2. Verfahren nach Anspruch 1, **dadurch gekennzeichnet, dass** eine Abfolge von maximalen Gruppengrößen je Zeitfenster vorgegeben ist und die für das jeweilige Zeitfenster gültige maximale Gruppengröße anhand der Anzahl der in vorangehenden Zeitfenstern tatsächlich bereits ausgelösten Aktoren bestimmt wird.

3. Verfahren nach einem der vorangehenden Ansprüche, **dadurch gekennzeichnet, dass** in einer indexgesteuerten Tabelle die Abfolge von maximalen Gruppengrößen gespeichert ist und die Anzahl der in zurückliegenden Zeitfenstern bereits ausgelösten Aktoren den Index ergibt und anhand der Tabelle mittels des Index die maximale Gruppengröße ermittelt wird.

4. Verfahren nach einem der vorangehenden Ansprüche 1 oder 2, **dadurch gekennzeichnet, dass** für die einzelnen Aktoren unterschiedliche Auslösezeitdauern vorgegeben sind und die maximale Gruppengröße für das jeweilige Zeitfenster adaptiv anhand der tatsächlich bereits ausgelösten Aktoren und deren jeweiliger Auslösezeitdauer bestimmt wird.

5. Verfahren nach Anspruch 4 in Verbindung mit 2, **dadurch gekennzeichnet, dass** die Abfolge von maximalen Gruppengrößen in Abhängigkeit von den unterschiedlichen Auslösezeitdauern der ausgelösten Aktoren verändert wird, indem bei einem auszulösenden Aktor mit einer ein Zeitfenster übersteigenden Auslösezeitdauern in der Abfolge entsprechend dieser übersteigenden Auslösezeitdauer in den in der Abfolge folgenden Zeitfenstern die maximale Gruppengröße jeweils reduziert wird.

6. Verfahren nach einem der vorangehenden Ansprüche, **dadurch gekennzeichnet, dass**
in einer indexgesteuerten Tabelle die Abfolge von maximalen Gruppengrößen gespeichert ist und die Anzahl der in zurückliegenden Zeitfenstern bereits ausgelösten Aktoren den Index ergibt und anhand der Tabelle mittels des Index die vorläufige maximale Gruppengröße ermittelt wird,
zusätzlich zumindest die Anzahl der Aktoren mit das letzte Zeitfenster übersteigender Auslösezeitdauer bestimmt und diese Anzahl von der vorläufigen maximalen Gruppengröße abgezogen und die adaptive maximale Gruppengröße bestimmt wird.

7. Verfahren nach einem der vorangehenden Ansprüche, **dadurch gekennzeichnet, dass** für die Aktoren unterschiedliche Prioritäten vorgegeben sind und innerhalb eines Zeitfensters die Aktoren entsprechend deren Priorität ausgelöst werden und die Auslösung einer die aktuelle, adaptiv angepasste maximale Gruppengröße überschreitende Anzahl von Aktoren in nachfolgende Zeitfenster verschoben werden.

8. Verfahren nach einem der vorangehenden Ansprüche, **dadurch gekennzeichnet, dass** ein Nachladen der Energiequelle bei der maximalen Gruppengröße berücksichtigt, vorzugsweise nach Ablauf einer vorgegebenen Zeitspanne der Index jeweils um einen Schritt zurückgesetzt wird.

9. Steuergerät zum Auslösen einer Mehrzahl von Aktoren eines Sicherheitssystems eines Kraftfahrzeugs aus einer Energiequelle mit Mitteln zur Durchführung eines Verfahrens nach einem der vorangehenden Ansprüche, insbesondere einem entsprechenden Algorithmus sowie Speichermitteln.

## Claims

1. A method for triggering a plurality of actuators of a safety system of a motor vehicle from an energy source, wherein, by using sensor signals, the requirement for triggering and the desired triggering time period are determined and a maximum group size of actuators to be triggered within a time window is predefined, **characterized in that**
for successive time windows, individual, at least partly different, maximum group sizes are respectively predefined and the maximum group size for the respective time window is determined adaptively by using the actuators already actually triggered in preceding time windows.

2. The method according to Claim 1, **characterized in that** a sequence of maximum group sizes is predefined for each time window and the valid maximum group size for the respective time window is determined by using the number of actuators already actually triggered in preceding time windows.

3. The method according to any one of the preceding claims, **characterized in that** the sequence of maximum group sizes is stored in an index-controlled table and the number of actuators already triggered in previous time windows produces the index and the maximum group size is ascertained by using the table by means of the index.

4. The method according to any one of the preceding Claims 1 or 2, **characterized in that** different triggering time periods are predefined for the individual actuators and the maximum group size for the respective time window is determined adaptively by using the actuators already actually triggered and the respective triggering time periods thereof.

5. The method according to Claim 4 in conjunction with Claim 2, **characterized in that** the sequence of maximum group sizes is amended as a function of the different triggering time periods of the triggered actuators, **in that** in the event of an actuator which is to be triggered having a triggering time period exceeding a time window in the sequence, the maximum group size is reduced in each case in accordance with this exceeding triggering time period in the following time windows in the sequence.

6. The method according to any one of the preceding claims, **characterized in that**
the sequence of maximum group sizes is stored in an index-controlled table and the number of actuators already actually triggered in previous time windows produces the index and the provisional maximum group size is ascertained by using the table by means of the index,
in addition, at least the number of actuators having a triggering time period exceeding the last time window is determined and this number is deducted from the provisional maximum group size and the adaptive maximum group size is determined.

7. The method according to any one of the preceding claims, **characterized in that** different priorities are predefined for the actuators and the actuators are triggered in accordance with the priority thereof within a time window and the triggering of a number of actuators exceeding the current adaptively adjusted maximum group size is displaced into subsequent time windows.

8. The method according to any one of the preceding claims, **characterized in that** a recharging of the energy source is taken account of for the maximum group size, preferably following the expiry of a predefined time interval, the index is reset in each case by one step.

9. A control device for triggering a plurality of actuators of a safety system of a motor vehicle from an energy source having means for carrying out a method according to any one of the preceding claims, in particular an appropriate algorithm as well as storage means.

## Revendications

1. Procédé pour le déclenchement d'une multiplicité d'actionneurs d'un système de sécurité d'un véhicule par une source d'énergie, la nécessité du déclenchement et un intervalle de déclenchement souhaité étant déterminés à l'aide de signaux de capteurs et une grandeur de groupe maximale d'actionneurs pour le déclenchement pendant une fenêtre temporelle étant prédéfinie, **caractérisé en ce que**
des grandeurs de groupes maximales respectivement individuelles, au moins partiellement différentes, sont prédéfinies pour des fenêtres temporelles se succédant et **en ce que** la grandeur de groupe maximale pour la fenêtre temporelle respective est déterminée de façon adaptative à l'aide d'actionneurs effectivement déjà déclenchés lors de fenêtres temporelles précédentes.

2. Procédé selon la revendication 1, **caractérisé en ce qu'**une séquence de grandeurs de groupes maximales par fenêtre temporelle est prédéfinie et **en ce que** la grandeur de groupe maximale valide pour la fenêtre temporelle respective est déterminée à l'aide du nombre des actionneurs effectivement déjà déclenchés lors de fenêtres temporelles précédentes.

3. Procédé selon l'une des revendications précédentes, **caractérisé en ce que** la séquence de grandeurs de groupes maximales est enregistrée dans une table à commande par indice et **en ce que** le nombre des actionneurs déjà déclenchés lors de fenêtres temporelles passées fournit l'indice et **en ce que** la grandeur de groupe maximale est déterminée à l'aide de la table au moyen de l'indice.

4. Procédé selon l'une des revendications précédentes 1 ou 2, **caractérisé en ce que** des durées de déclenchement différentes sont prédéfinies pour les différents actionneurs et **en ce que** la grandeur de groupe maximale est déterminée de façon adaptative à l'aide des actionneurs effectivement déjà déclenchés et de leur durée de déclenchement respective.

5. Procédé selon la revendication 4 conjointement avec la revendication 2, **caractérisé en ce que** la séquence de grandeurs de groupes maximales est modifiée en fonction des durées de déclenchement différentes des actionneurs déclenchés, la grandeur de groupe maximale étant réduite respectivement dans les fenêtres temporelles suivantes dans la séquence, pour un actionneur devant être déclenché avec une durée de déclenchement dépassant une fenêtre temporelle dans la séquence, conformément à cette durée de déclenchement dépassante.

6. Procédé selon l'une des revendications précédentes, **caractérisé en ce que**
la séquence de grandeurs de groupes maximales est enregistrée dans une table à commande par indice et **en ce que** le nombre des actionneurs déjà déclenchés lors de fenêtres temporelles passées fournit l'indice et **en ce que** la grandeur de groupe maximale provisoire est déterminée à l'aide de la table au moyen de l'indice,
**en ce qu'**au moins le nombre des actionneurs avec durée de déclenchement dépassant la dernière fenêtre temporelle est, en outre, déterminé et **en ce que** ce nombre est déduit de la grandeur de groupe maximale provisoire et **en ce que** la grandeur de groupe maximale adaptative est déterminée.

7. Procédé selon l'une des revendications précédentes, **caractérisé en ce que** des priorités différentes sont prédéfinies pour les actionneurs et **en ce que**, dans une fenêtre temporelle, les actionneurs sont déclenchés corrélativement à leur priorité et **en ce que** le déclenchement d'un nombre d'actionneurs dépassant la grandeur de groupe maximale actuelle, ajustée de façon adaptative est reporté aux fenêtres temporelles suivantes.

8. Procédé selon l'une des revendications précédentes, **caractérisé en ce qu'**un rechargement de la source d'énergie est pris en compte pour la grandeur de groupe maximale, l'indice étant décrémenté respectivement d'un pas, de préférence après écoulement d'un intervalle de temps prédéfini

9. Appareil de commande pour le déclenchement d'une multiplicité d'actionneurs d'un système de sécurité d'un véhicule par une source d'énergie avec des moyens pour l'exécution d'un procédé selon l'une des revendications précédentes, en particulier d'un algorithme correspondant ainsi que de moyens de stockage.
